# EUROPÄISCHE PATENTSCHRIFT

(11) **EP 3 630 369 B1**
(45) Veröffentlichungstag und Bekanntmachung des Hinweises auf die Patenterteilung: **01.12.2021**
(21) Anmeldenummer: 18732244.1
(22) Anmeldetag: 31.05.2018
(51) Int. Cl.: B05B 7/24, B64F 5/40

(54) **VORRICHTUNG UND VERFAHREN ZUR REPARATUR VON OBERFLÄCHEN IN DER FLUGZEUGKABINE**
DEVICE AND METHOD FOR REPAIRING AIRCRAFT CABIN SURFACES
DISPOSITIF ET PROCÉDÉ POUR RÉPARER DES SURFACES DANS UNE CABINE D'AVION

(30) Priorität: 01.06.2017 DE 102017209353
(43) Veröffentlichungstag der Anmeldung: 08.04.2020
(73) Patentinhaber: Lufthansa Technik AG, 22335 Hamburg (DE)
(72) Erfinder: SCHULZE, Malte, 65468 Trebur-Geinsheim (DE); WENER, Dietmar, 55278 Ludwigshöhe (DE)
(74) Vertreter: Glawe, Delfs, Moll
(86) Internationale Anmeldenummer: PCT/DE2018/100529
(87) Internationale Veröffentlichungsnummer: WO 2018/219411

(56) Entgegenhaltungen:
- EP-A1- 3 108 965
- DE-A1-102010 029 722
- DE-T2- 60 109 308
- DE-U1- 29 600 671
- US-A- 3 945 571
- US-A1- 2004 112 982
- US-A1- 2005 111 995
- US-A1- 2008 230 630
- US-A1- 2011 078 986
- US-A1- 2016 121 347

## Beschreibung

Gegenstand der Erfindung ist ein System aus einem Transportfahrzeug und einer Vorrichtung zur Reparatur von Oberflächen in einer Flugzeugkabine, mit einer Lackierpistole, einem Lackbehälter und einer Druckluftquelle. Weitere Gegenstände der Erfindung sind die Verwendung des erfindungsgemäßen Systems zur Lackierung von Oberflächen in einer Flugzeugkabine sowie ein Verfahren zur Reparatur von Oberflächen in einer Flugzeugkabine.

Die Oberflächen von Kabineneinrichtungen in Flugzeugen wie beispielsweise Sitzen oder Staumöbeln können während ihrer Nutzung beschädigt werden und unterliegen dem Verschleiß. Beispielsweise kann es zu Kratzern oder Abschabungen an lackierten Oberflächen oder dem Leder oder Kunstleder von Sitzen, Armlehnen oder dergleichen kommen.

In der Regel erfolgt eine Reparatur der beschädigten Kabinenteile nach vorheriger Demontage in einer Werkstatt. EP 3 108 965 A1 offenbart ein tragbares Lackiersystem, das mit einem mobilen Kompressor als Druckluftquelle arbeitet. Tragbare Lackiersysteme sind zudem aus den Dokumenten US 3,945,571, US 2008/0230630 A1, und US 2005/0111995 A1 bekannt. Das Dokument DE 296 00 671 U offenbart ein Gerät mit Kompressor und Fahrgestell zum Verspritzen von Farben.

Der Erfindung liegt die Aufgabe zu Grunde, ein System und ein Verfahren der eingangs genannten Art zu schaffen, die bzw. das eine Reparatur beschädigter Oberflächen innerhalb der Flugzeugkabine innerhalb eines kurzen Zeitraums ermöglicht, zuverlässig im Dauerbetrieb einsetzbar ist und dessen Eigenschaften eine hohe Oberflächengüte der hergestellten bzw. lackierten Oberflächen erlauben.

Die Erfindung löst diese Aufgabe mit den Merkmalen der unabhängigen Ansprüche. Vorteilhafte Ausführungsformen sind in den abhängigen Ansprüchen beschrieben.

Zunächst seien einige im Rahmen der Erfindung verwendete Begriffe erläutert.

Die Vorrichtung des erfindungsgemäßen Systems dient zur Reparatur von Oberflächen in einer Flugzeugkabine. In Flugzeugkabinen finden sich eine Vielzahl lackierter oder beschichteter Oberflächen wie beispielsweise Sitze, Einbaumöbel, Staufächer, Wandverkleidungen und dergleichen. Bei der Verwendung von Lederpolstern sind in der Regel auch die Lederoberflächen lackiert bzw. beschichtet. Diese Oberflächen können durch Kratzer oder dergleichen beschädigt werden. Eine Reparatur erfordert nach gegebenenfalls nötigen vorbereitenden Arbeiten wie Schleifen oder Spachteln einen oder mehrere Lackaufträge. Dies erlaubt die erfindungsgemäße Vorrichtung bzw. ist Gegenstand des erfindungsgemäßen Verfahrens.

Eine Lackierpistole zerstäubt aus einem Lackbehälter entnommenen Lack fein verteilt unter Zuhilfenahme von Druckluft aus der Druckluftquelle. Erfindungsgemäß ist die Druckluftquelle als Pressluftbehälter ausgebildet. Dies erlaubt im mobilen Betrieb im Inneren eines Flugzeugs die Bereitstellung hoher Druckluftvolumenströme, mit denen sich ein hochwertiges Lackierergebnis zuverlässig erzielen lässt. Eine externe Energiezufuhr (beispielsweise zum Betrieb eines Kompressors) ist nicht erforderlich, ferner gibt es keine beweglichen und damit verschleiß- und fehleranfälligen Teile. Diese Zuverlässigkeit im mobilen Betrieb ist von besonderer Bedeutung, um Beschädigungen in einer Flugzeugkabine kurzfristig während des regulären Umlaufs eines Flugzeugs reparieren zu können.

Die Lackierpistole kann mittels einer Sicherheitskupplung an den Druckregler angeschlossen sein. Diese bewirkt, dass beim Trennen der Verbindung zwischen Lackierpistole und Druckregler das System druckfrei geschaltet wird.

Im Langstreckenbetrieb eingesetzte Flugzeuge haben im Umlauf reguläre Standzeiten von einigen Stunden, dies ist hinreichend Zeit, um mit einer erfindungsgemäßen Vorrichtung verlässlich beschädigte Oberflächen reparieren zu können, insbesondere im Bereich der First- und Business-Class, da gerade dort eine Vielzahl solcher Oberflächen vorhanden sind. Die Erfindung erleichtert durch den Verzicht auf externe Energiequellen und/oder einen Anschluss an das Bordnetz des Flugzeugs die Durchführung solcher Reparaturarbeiten parallel zu anderen Arbeiten in der Kabine. Damit ist eine effizientere Nutzung der Standzeit eines Flugzeugs möglich, der im Stand der Technik übliche Austausch von beschädigten Teilen mit anschließender externer Reparatur kann entfallen.

Das mobile Lackiersystem der EP 3 108 965 A1 kann dies nicht leisten, da der dort verwendete mobile Kompressor keinen hinreichenden Druckluftstrom für hochwertige Lackierergebnisse liefern kann, zudem im Dauerbetrieb störungsanfällig und unangenehm laut für den Bediener und die Umgebung ist. Die Reparatur größerer Oberflächen, bei denen Lackierpistolen mit einem Luftdurchsatz von beispielsweise mehr als 40 l/min notwendig sind, ist bei Verwendung dieses Systems nicht möglich oder benötigt zumindest deutlich mehr Zeit.

Bevorzugt ist der Druckregler zur Einstellung eines definierten Luftvolumenstroms im Bereich 40 bis 250 l/min, vorzugsweise 80 bis 250 l/min ausgebildet. Diese Volumenangaben beziehen sich auf technische Normalbedingungen (1 bar, 20°C). Der Pressluftbehälter kann solche Volumenströme zuverlässig, konstant und über einen längeren Zeitraum zur Verfügung stellen. Volumenströme im oberen Bereich des beanspruchten Bereichs können insbesondere erforderlich sein zur Verarbeitung von lösemittelarmen oder lösemittelfreien Lacken, die häufig eine höhere Viskosität aufweisen und deswegen schwieriger blasenfrei aufgetragen werden können. Das Regelventil bzw. der Druckregler können diesen Volumenstrom beispielsweise bereitstellen mit einem Druck von 2-5 bar. Diese Druckregelung kann erfolgen durch einen Druckminderer, der für pressluftbetriebene Werkzeuge vorgesehen ist. Dieser erlaubt eine exakte Einstellung des Drucks und damit des abgegebenen Volumenstroms.

Der Pressluftbehälter kann erfindungsgemäß ein Flaschenvolumen von 15 l oder weniger, vorzugsweise 3,5 bis 15 l aufweisen. Das Flaschenvolumen ist das nutzbare, unter Druck stehende Innenvolumen des Behälters. Pressluftbehälter mit diesem Volumen können einerseits genügend Druckluft speichern zur Durchführung auch aufwändigerer Reparaturarbeiten in einer Flugzeugkabine, sind aber andererseits noch hinreichend mobil und leicht, um vom Bedienungspersonal im Inneren einer Flugzeugkabine handhabbar zu sein. Der Pressluftbehälter kann beispielsweise aus Faserverbundwerkstoff hergestellt sein und eine Edelstahleinlage aufweisen, um druckfest mit einem geringen Eigengewicht ausgebildet zu sein.

Der Pressluftbehälter kann mit einem geeigneten Tragegurt versehen sein und beispielsweise zum Tragen auf dem Rücken einer Bedienperson ausgebildet sein. Alternativ kann der Pressluftbehälter auch zum Tragen an der Hüfte einer Bedienperson ausgebildet sein. Er kann beispielsweise als Pressluftflasche ausgebildet sein.

Der Pressluftbehälter kann erfindungsgemäß für einen Fülldruck von wenigstens 15 bar, vorzugsweise wenigstens 25 bar, weiter vorzugsweise wenigstens 50 bar, weiter vorzugsweise 200 bis 400 bar ausgelegt sein. Dies erlaubt die Speicherung und Abgabe eines hinreichend hohen Füllvolumens.

Vorzugsweise kann der Pressluftbehälter zur Aufnahme eines Füllvolumens von wenigstens 250 l, weiter vorzugsweise wenigstens 500 l, weiter vorzugsweise wenigstens 1.000 l, weiter vorzugsweise 2.000 bis 3.000 l ausgelegt sein. Es handelt sich hier um die Angabe des Füllvolumens bei einer Temperatur von 20°. Ein gespeichertes Füllvolumen von 2.500 l ermöglicht beispielsweise einen zehnminütigen Lackierbetrieb mit einem Volumenstrom von 250 l/min.

Erfindungsgemäß weist die Vorrichtung einen Flüssigkeitsabscheider zwischen Pressluftbehälter und Lackierpistole auf. Das Arbeiten mit trockener, ölfreier Druckluft ist eine wichtige Voraussetzung für qualitativ hochwertige Oberflächen insbesondere bei der Verwendung lösemittelarmer oder lösemittelfreier Lacke. Die erfindungsgemäße Kombination mit einem Pressluftbehälter, in den (siehe unten) bereits gereinigte bzw. trockene Druckluft gefüllt werden kann, mit einer nochmaligen Flüssigkeitsabscheidung vor der Lackierpistole ermöglicht besonders hochwertige Lackierergebnisse.

Bei der Verwendung eines mobilen Kompressors, der zwangsläufig geschmiert sein muss, ist dies nicht möglich.

Der Pressluftbehälter kann erfindungsgemäß mit einem Stoßschutz versehen sein. Beispielsweise kann ein gegebenenfalls gepolsterter Überzug aus Neopren oder dergleichen vorgesehen sein, dies verhindert insbesondere eine Beschädigung von Oberflächen in der Kabine beim Hantieren mit dem Pressluftbehälter im Flugzeuginneren.

Gegenstand der Erfindung ist ein System aus einer beschriebenen Vorrichtung und einem Transportfahrzeug, das einen Drucklufterzeuger aufweist, der zum Befüllen der Pressluftbehälter mit Druckluft ausgebildet ist. Mithilfe dieses Systems ist es möglich, die Vorrichtung schnell beispielsweise zu verschiedenen Parkpositionen von Flugzeugen zu bringen und zwischen zwei Reparaturvorgängen die Pressluftbehälter wieder zu befüllen.

Das Transportfahrzeug kann zusätzlich eine Reinigungseinrichtung für die Lackierpistole aufweisen. Dies erlaubt eine Reinigung und beispielsweise Vorbereitung für einen weiteren Lackiervorgang im Zuge des Transports zum nächsten Einsatz.

Erfindungsgemäß ist ein Feuchtigkeitsabscheider zwischen dem Drucklufterzeuger und dem Anschluss zum Befüllen der Pressluftbehälter vorgesehen. Die Pressluftbehälter können somit trockener, ölfreier und qualitativ hochwertiger Druckluft befüllt werden.

Erfindungsgemäß ist weiterhin ein Flüssigkeitsabscheider zwischen Pressluftbehälter und Lackierpistole vorgesehen. Diese Konfiguration ermöglicht besonders hochwertige Lackierergebnisse auch bei der Verarbeitung lösemittelfreier Lacke.

Weiterhin kann das erfindungsgemäße System eine mobile Luftabsauganlage zur Absaugung von durch Lack verunreinigter Luft aus der Kabine umfassen. Die Luftabsauganlage weist bevorzugt einen Luftfilter auf. Die Luftabsauganlage kann zudem eine Ableitung, beispielsweise einen Schlauch, aufweisen, durch welche die verunreinigte Luft nach außen befördert werden kann.

Ein weiterer Gegenstand der Erfindung ist die Verwendung eines erfindungsgemäßen Systems zur Lackierung von Oberflächen in einer Flugzeugkabine. Es kann sich dabei insbesondere um Oberflächen von Sitzen, Einbaumöbeln, Staufächern, Wandverkleidungen und dergleichen handeln.

Die erfindungsgemäße Verwendung erfolgt bevorzugt mit lösemittelarmen oder lösemittelfreien Lacksystemen. Konventionell formulierte Lacksysteme enthalten typischerweise 45-65 Gew.-% organische Lösungsmittel. Lösemittelarme Lacksysteme im Sinne der Erfindung enthalten 3-25 Gew.-%, vorzugsweise 3-20 Gew.-% organische Lösungsmittel. Dabei kann es sich auch um Cosolventien in Wasserlacken handeln. Lösemittelfreie Lacksysteme im Sinne der Erfindung enthalten keine oder nur minimale Anteile Lösungsmittel, die im Zuge der Trocknung an die Umgebung abgegeben werden. Lösemittelfreie Lacksysteme können beispielsweise Reaktivverdünner enthalten, die im nicht ausgehärteten Zustand als Lösungsmittel wirken und beim Aushärten mit den übrigen Bestandteilen des Lacksystems polymerisieren oder vernetzen. Es kann sich beispielsweise um lichthärtende Lacksysteme handeln, deren Aushärtung beispielsweise durch UV- Bestrahlung initiiert bzw. unterstützt werden kann. Alternativ oder zusätzlich kann die Aushärtung auch durch Wärmebestrahlung initiiert bzw. unterstützt werden, beispielsweise unter Verwendung eines Heißluftgebläses.

Die erfindungsgemäße Verwendung dient besonders bevorzugt zur Reparatur von Oberflächen in einer Flugzeugkabine. Insbesondere in Verbindung mit lösemittelarmen oder lösemittelfreien Lacksystemen kann eine solche Reparatur durchgeführt werden, ohne dass besondere Lüftungsmaßnahmen durchgeführt werden müssen, gleichzeitig in der Kabine arbeitendes Personal beeinträchtigt wird oder im Anschluss an die Reparatur einsteigende Passagiere durch Geruch belästigt werden. Alternativ kann die oben genannte mobile Luftabsauganlage verwendet werden, um durch Lack verunreinigte Luft aus der Kabine heraus zu befördern.

Ein weiterer Gegenstand der Erfindung ist ein Verfahren zur Reparatur von Oberflächen in einer Flugzeugkabine, mit den Schritten:
a. Vorbereiten der Oberflächen für die Reparatur,
b. Aufbringen wenigstens einer Lackschicht unter Verwendung eines erfindungsgemäßen Systems.

Das Vorbereiten der Oberflächen kann insbesondere umfassen ein Abschleifen, Spachteln, Abkleben der Umgebung, Reinigen mit einem geeigneten Lösungsmittel oder Reiniger, Anpassen der Oberflächenstruktur durch Prägen der umliegenden Struktur oder dergleichen. Erfindungsgemäß ist auch ein mehrfaches Lackieren, gegebenenfalls mit Zwischenschritten wie Trocknen, Schleifen, Polieren oder dergleichen möglich.

Erfindungsgemäß kann der lackierte Oberflächenbereich insbesondere eine Fläche von 1.000 cm² oder weniger umfassen. Dies sind typische Flächen, die im Flugbetrieb beschädigt werden können und erfindungsgemäß üblicherweise in dem zur Verfügung stehenden Zeitraum am Boden während des Umlaufs eines Flugzeugs (insbesondere Langstreckenflugzeugs) repariert werden können.

Nachfolgend wird die vorliegende Erfindung unter Bezugnahme auf die beigefügten Zeichnungen beispielhaft erläutert. Es zeigen:
- Figur 1:: eine Vorrichtung zur Reparatur von Oberflächen;
- Figur 2:: ein erfindungsgemäßes System aus einer Vorrichtung zur Reparatur von Oberflächen und einem Transportfahrzeug.

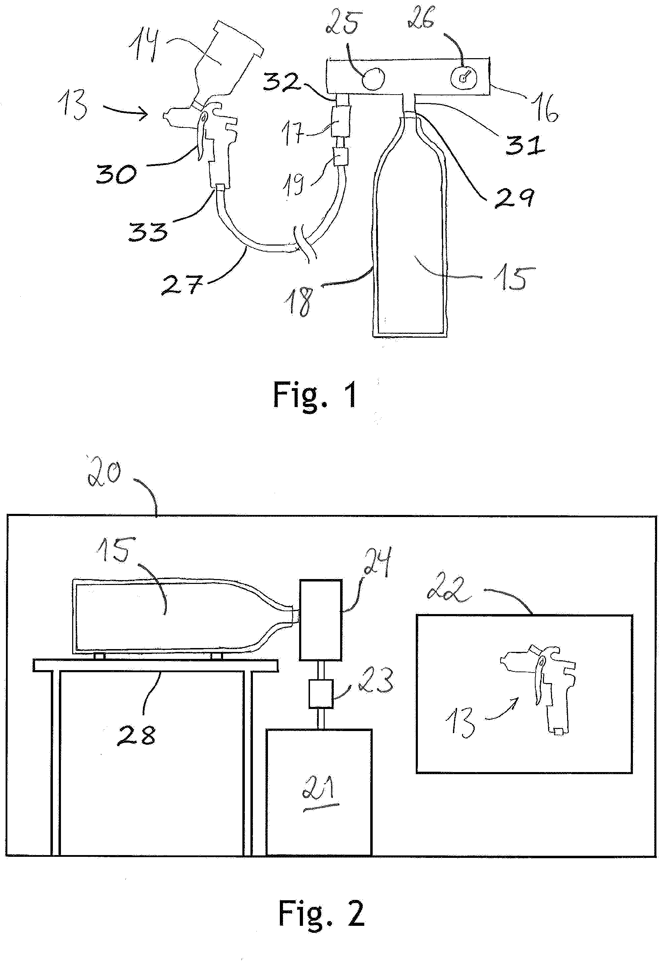

Figur 1 zeigt eine Vorrichtung zur Reparatur von Oberflächen in einer Seitenansicht. Die Vorrichtung umfasst eine Lackierpistole 13 mit einer Einlassöffnung 33, welche - wie nachfolgend noch genauer erläutert - mit einer Druckluftquelle 15 verbunden ist. Die Lackierpistole 13 ist zudem mit einem Lackbehälter 14 verbunden, welcher mit einem lösungsmittelfreien oder lösungsmittelarmen Lack befüllt ist. Die Lackierpistole 13 weist einen Abzug 30 auf, bei dessen Betätigung aus der Druckluftquelle 15 bereitgestellte Druckluft aus einer Sprühöffnung der Lackierpistole 13 ausgeblasen wird. Dabei wird aus dem Lackbehälter 14 bereitgestellter Lack von der Druckluft mitgerissen und über die Sprühöffnung ausgebracht.

Die Druckluftquelle ist in Figur 1 als Pressluftbehälter 15 mit einem Flaschenvolumen von 7 l und einem Fülldruck von 300 bar ausgebildet. Der Pressluftbehälter 15 befindet sich in einem gepolsterten Überzug 18, welcher als Stoßschutz dient. An seinem oberen Ende weist der Pressluftbehälter 15 einen Pressluftausgang 29 auf, welcher mit einem Eingang 31 eines Druckreglers 16 verbunden ist.

Der Druckregler 16 weist einen Druckregelknopf 25, eine Druckanzeige 26 sowie einen Reglerausgang 32 auf. Der Druckregler 16 fungiert vorliegend als Druckminderer, d. h. der am Eingang 31 anliegende Druck wird auf einen niedrigeren Druck vermindert, welcher über den Reglerausgang 32 abgegeben wird. Mit Hilfe des Druckregelknopfes 25 kann der über den Reglerausgang 32 abgegebene Druck in einem Bereich zwischen 2-5 bar eingestellt werden. Auf diese Weise kann der über den Reglerausgang 32 abgegebene Volumenstrom beispielsweise in einem Bereich zwischen 40-250 l/min eingestellt werden.

Der Reglerausgang 32 ist über einen Flüssigkeitsabscheider 17, eine Sicherheitskupplung 19 sowie einen Druckluftschlauch 27 mit der Einlassöffnung 33 der Lackierpistole 13 verbunden. Vom Druckregler 16 abgegebene Druckluft passiert somit zunächst den Flüssigkeitsabscheider 17, wobei in der Druckluft vorhandene Feuchtigkeit durch den Flüssigkeitsabscheider 17 entfernt, die Druckluft also getrocknet wird. Die getrocknete Druckluft gelangt dann über die Sicherheitskupplung 19 und den Druckluftschlauch 27 in die Lackierpistole, um den Lack wie oben bereits beschrieben auszubringen.

Figur 2 zeigt eine schematische Ansicht eines erfindungsgemäßen Systems umfassend eine Vorrichtung zur Reparatur von Oberflächen und ein Transportfahrzeug, wobei lediglich ein Laderaum 20 des Transportfahrzeuges in Figur 2 schematisch gezeigt ist. Im Laderaum 20 befindet sich ein Drucklufterzeuger 21 mit einem Anschluss 24 zum Befüllen von Pressluftbehältern sowie eine Reinigungseinrichtung 22. In der Reinigungseinrichtung 22 ist die Lackierpistole 13, welche zuvor vom Druckluftschlauch 27 getrennt wurde, angeordnet, um diese zu reinigen.

Zur Befüllung des Pressluftbehälters 15 wird der (in Figur 2 nicht gezeigte) Druckregler 16 vom Pressluftausgang 29 getrennt. Der Pressluftbehälter 15 wird dann auf ein im Laderaum 20 angeordnetes Gestell 28 positioniert, um den Pressluftausgang 29 mit dem Anschluss 24 zum Befüllen von Pressluftbehältern zu verbinden. Dieser Zustand ist in der Figur 2 gezeigt. Zwischen dem Drucklufterzeuger 21 und dem Anschluss 24 befindet sich ein Feuchtigkeitsabscheider 23. Vom Drucklufterzeuger 21 erzeugte Druckluft kann auf diese Weise zunächst durch den Feuchtigkeitsabscheider 23 getrocknet und anschließend über den Anschluss 24 in den Pressluftbehälter 15 eingebracht werden. Nach dem Einfüllvorgang ist der Pressluftbehälter 15 mit trockener, ölfreier und qualitativ hochwertiger Druckluft befüllt und kann anschließend erneut mit dem Druckregler und der Lackierpistole 13 verbunden werden, um das erfindungsgemäße System zur Reparatur von Oberflächen in einer Flugzeugkabine zu verwenden, bzw. um das erfindungsgemäße Verfahren auszuführen.

## Patentansprüche

1. System umfassend eine Vorrichtung zur Reparatur von Oberflächen in einer Flugzeugkabine und ein Transportfahrzeug (20), wobei die Vorrichtung eine Lackierpistole (13), einen Lackbehälter (14) und eine Druckluftquelle (15) aufweist, wobei die Druckluftquelle (15) als Pressluftbehälter ausgebildet ist, wobei ein Druckregler (16) zur Einstellung eines definierten Luftvolumenstroms vorgesehen ist, wobei die Vorrichtung einen Flüssigkeitsabscheider (17) zwischen Pressluftbehälter (15) und Lackierpistole (13) aufweist, wobei das Transportfahrzeug (20) einen Drucklufterzeuger (21), der zum Befüllen der Pressluftbehälter (15) mit Druckluft ausgebildet ist, und einen Anschluss (24) zum Befüllen der Pressluftbehälter (15) aufweist und wobei ein Feuchtigkeitsabscheider (23) zwischen dem Drucklufterzeuger (21) und dem Anschluss (24) zum Befüllen der Pressluftbehälter (15) vorgesehen ist.

2. System nach Anspruch 1, **dadurch gekennzeichnet, dass** der Druckregler (16) zur Einstellung eines definierten Luftvolumenstroms im Bereich 40 bis 250 l/min, vorzugsweise 80 bis 250 l/min ausgebildet ist.

3. System nach Anspruch 1 oder 2, **dadurch gekennzeichnet,**
**dass** der Pressluftbehälter (15)
- ein Flaschenvolumen von 15 l oder weniger, vorzugsweise 3,5 bis 15 l aufweist und/oder
- für einen Fülldruck von wenigstens 15 bar, vorzugsweise wenigstens 25 bar, weiter vorzugsweise wenigstens 50 bar, weiter vorzugsweise 200 bis 400 bar ausgelegt ist und/oder
- zur Aufnahme eines Füllvolumens von wenigstens 250 l, vorzugsweise wenigstens 500 l, weiter vorzugsweise wenigstens 1.000 l, weiter vorzugsweise 2.000 bis 3.000 l ausgelegt ist und/oder
- zum Tragen auf dem Rücken oder zum Tragen an der Hüfte einer Bedienungsperson ausgebildet ist.

4. System nach einem der Ansprüche 1 bis 3, **dadurch gekennzeichnet, dass** der Pressluftbehälter (15) mit einem Stoßschutz (18) versehen ist.

5. System nach einem der Ansprüche 1 bis 4, **dadurch gekennzeichnet, dass** das Transportfahrzeug (20) zusätzlich eine Reinigungseinrichtung (22) für die Lackierpistole (13) aufweist.

6. Verwendung eines Systems nach einem der Ansprüche 1 bis 5 zur Lackierung von Oberflächen in einer Flugzeugkabine.

7. Verwendung nach Anspruch 6, **dadurch gekennzeichnet, dass** der Lack lösemittelfrei oder lösemittelarm ist.

8. Verwendung nach Anspruch 6 oder 7 zur Reparatur von Oberflächen in einer Flugzeugkabine.

9. Verfahren zur Reparatur von Oberflächen in einer Flugzeugkabine, mit den Schritten:
- Vorbereiten der Oberflächen für die Reparatur,
- Aufbringen wenigstens einer Lackschicht unter Verwendung eines Systems nach einem der Ansprüche 1 bis 5.

10. Verfahren nach Anspruch 9, **dadurch gekennzeichnet, dass** das Vorbereiten ein Reinigen und/oder Spachteln der Oberfläche umfasst.

11. Verfahren nach Anspruch 9 oder 10, **dadurch gekennzeichnet, dass** der lackierte Oberflächenbereich eine Fläche von 1.000 cm² oder weniger umfasst.

## Claims

1. System comprising an apparatus for repairing surfaces in an aircraft cabin and comprising a transport vehicle (20), wherein the apparatus has a paint-spray gun (13), has a paint container (14) and has a pressurized-air source (15), wherein the pressurized-air source (15) is in the form of a compressed-air container, wherein provision is made of a pressure regulator (16) for setting a defined air volumetric flow rate, wherein the apparatus has a liquid separator (17) between the compressed-air container (15) and the paint-spray gun (13), wherein the transport vehicle (20) has a pressurized-air generator (21), which is configured for filling the compressed-air container (15) with pressurized air, and a connector (24) for filling of the compressed-air container (15), and wherein provision is made of a moisture separator (23) between the pressurized-air generator (21) and the connector (24) for filling of the compressed-air container (15).

2. System according to Claim 1, **characterized in that** the pressure regulator (16) is configured for setting a defined air volumetric flow rate in the range of 40 to 250 1/min, preferably 80 to 250 1/min.

3. System according to Claim 1 or 2, **characterized in that** the compressed-air container (15)
- has a bottle volume of 15 1 or less, preferably 3.5 to 15 1, and/or
- is designed for a filling pressure of at least 15 bar, preferably at least 25 bar, more preferably at least 50 bar, more preferably 200 to 400 bar, and/or
- is designed for receiving a filling volume of at least 250 1, preferably at least 500 1, more preferably at least 1000 l, more preferably 2000 to 3000 l, and/or
- is configured for being carried on the back or for being carried on the hip of an operating person.

4. System according to one of Claims 1 to 3, **characterized in that** the compressed-air container (15) is provided with an impact protection (18).

5. System according to one of Claims 1 to 4, **characterized in that** the transport vehicle (20) additionally has a cleaning device (22) for the paint-spray gun (13).

6. Use of a system according to one of Claims 1 to 5 for painting surfaces in an aircraft cabin.

7. Use according to Claim 6, **characterized in that** the paint is solvent-free or has a low solvent content.

8. Use according to Claim 6 or 7 for repairing surfaces in an aircraft cabin.

9. Method for repairing surfaces in an aircraft cabin, comprising the steps of:
- preparing the surfaces for the repair,
- applying at least one layer of paint using a system according to one of Claims 1 to 5.

10. Method according to Claim 9, **characterized in that** preparing comprises cleaning and/or filling the surface.

11. Method according to Claim 9 or 10, **characterized in that** the painted surface region comprises an area of 1000 cm² or less.

## Revendications

1. Système comprenant un dispositif pour la réparation de surfaces dans une cabine d'avion et un véhicule de transport (20), le dispositif comprenant un pistolet de laquage (13), un récipient de laque (14) et une source d'air comprimé (15), la source d'air comprimé (15) étant configurée sous la forme d'un récipient d'air sous pression, un régulateur de pression (16) pour l'ajustement un débit volumique d'air défini étant prévu, le dispositif comprenant un séparateur de liquide (17) entre le récipient d'air sous pression (15) et le pistolet de laquage (13), le véhicule de transport (20) comprenant un générateur d'air comprimé (21), qui est configuré pour le remplissage du récipient d'air sous pression (15) avec de l'air comprimé, et un raccord (24) pour le remplissage du récipient d'air sous pression (15), et un séparateur d'humidité (23) étant prévu entre le générateur d'air comprimé (21) et le raccord (24) pour le remplissage du récipient d'air sous pression (15).

2. Système selon la revendication 1, **caractérisé en ce que** le régulateur de pression (16) est configuré pour l'ajustement d'un débit volumique d'air défini dans la plage allant de 40 à 250 l/min, de préférence 80 à 250 l/min.

3. Système selon la revendication 1 ou 2, **caractérisé en ce que** le récipient d'air sous pression (15)
- présente un volume de bouteille de 15 l ou moins, de préférence de 3,5 à 15 l, et/ou
- est conçu pour une pression de remplissage d'au moins 15 bar, de préférence d'au moins 25 bar, de manière davantage préférée d'au moins 50 bar, de manière davantage préférée de 200 à 400 bar, et/ou
- est conçu pour la réception d'un volume de remplissage d'au moins 250 l, de préférence d'au moins 500 l, de manière davantage préférée d'au moins 1 000 l, de manière davantage préférée de 2 000 à 3 000 l, et/ou
- est configuré pour être porté sur le dos ou pour être porté sur la hanche d'un opérateur.

4. Système selon l'une quelconque des revendications 1 à 3, **caractérisé en ce que** le récipient d'air sous pression (15) est muni d'une protection contre les chocs (18).

5. Système selon l'une quelconque des revendications 1 à 4, **caractérisé en ce que** le véhicule de transport (20) comprend en outre un appareil de nettoyage (22) pour le pistolet de laquage (13).

6. Utilisation d'un système selon l'une quelconque des revendications 1 à 5 pour le laquage de surfaces dans une cabine d'avion.

7. Utilisation selon la revendication 6, **caractérisée en ce que** la laque est sans solvant ou pauvre en solvant.

8. Utilisation selon la revendication 6 ou 7 pour la réparation de surfaces dans une cabine d'avion.

9. Procédé de réparation de surfaces dans une cabine d'avion, comprenant les étapes suivantes :
- la préparation des surfaces pour la réparation,
- l'application d'au moins une couche de laque en utilisant un système selon l'une quelconque des revendications 1 à 5.

10. Procédé selon la revendication 9, **caractérisé en ce que** la préparation comprend un nettoyage et/ou un colmatage de la surface.

11. Procédé selon la revendication 9 ou 10, **caractérisé en ce que** la zone de surface laquée comprend une aire de 1 000 cm² ou moins.
